(19) Europäisches Patentamt
European Patent Office
Office européen des brevets

(11) Veröffentlichungsnummer: **0 271 547 B1**

(12) **EUROPÄISCHE PATENTSCHRIFT**

(45) Veröffentlichungstag der Patentschrift:
16.10.91 Patentblatt 91/42

(51) Int. Cl.⁵: **H04N 5/21, H04N 9/64**

(21) Anmeldenummer: **87904037.6**

(22) Anmeldetag: **30.05.87**

(86) Internationale Anmeldenummer:
**PCT/EP87/00281**

(87) Internationale Veröffentlichungsnummer:
**WO 87/07806 17.12.87 Gazette 87/28**

(54) **SYSTEM ZUR RAUSCHMINDERUNG.**

(30) Priorität: 07.06.86 DE 3619222
07.06.86 DE 3619223

(43) Veröffentlichungstag der Anmeldung:
22.06.88 Patentblatt 88/25

(45) Bekanntmachung des Hinweises auf die
Patenterteilung:
16.10.91 Patentblatt 91/42

(84) Benannte Vertragsstaaten:
**AT BE CH DE FR GB IT LI LU NL SE**

(56) Entgegenhaltungen:
**DE-A- 3 319 438**
**US-A- 4 223 341**
**US-A- 4 291 333**

(73) Patentinhaber: **Deutsche Thomson-Brandt GmbH**
**Hermann-Schwer-Strasse 3 Postfach 1307**
**W-7730 Villingen-Schwenningen (DE)**

(72) Erfinder: **KEESEN, Heinz-Werner**
**Tiestestr. 5**
**W-3000 Hannover 1 (DE)**
Erfinder: **PETERS, Hartmut**
**Tiestestr. 34**
**W-3000 Hannover 1 (DE)**

## Beschreibung

Die Erfindung betrifft eine Anordnung zur Rauschminderung mit Bewegungserkennung für digitalisierte Videosignale gemäß dem Oberbegriff des Patentanspruchs 1.

Aus der DE-A1-33 09 715 ist eine Anordnung zur Verminderung des Rauschens bekannt, das ein Fernsehsignal in einem Vollbildspeicher verzögert. Nachteilig ist dabei der digitale Speicher, der für die Größe eines Vollbildes ausgelegt sein muß. In der DE-A1-31 21 599 ist der zugehörige Tiefpaß, im folgenden Filter genannt, beschrieben. In diesem Filter werden für einen gestörten Bildpunkt sämtliche umliegenden und benachbarten Bildpunkte zur Bewertung herangezogen. Das sind die benachbarten Bildpunkte der aktuellen Zeile und die benachbarten Bildpunkte aus der vorangegangenen und der nachfolgenden Zeile.

Weiterhin ist aus der DE-A1-33 19 438 eine Anordnung zur Verminderung des Rauschens bekannt, bei der aus dem unverzögerten und dem um eine Bildperiode verzögerten Fernsehsignal ein Differenzsignal gebildet wird und dieses nach Bewertung mit einem Korrekturfaktor dem unverzögerten Fernsehsignal zuaddiert wird. Bei der Bildung des Differenzsignals wird ferner ein Bewegungssignal abgeleitet, das zur Bildung des Korrekturfaktors herangezogen wird. Auch diese bekannte Anordnung nutzt einen Vollbildspeicher.

Aufgabe der Erfindung ist, eine vereinfachte Anordnung zur Rauschminderung mit Bewegungserkennung für digitalisierte Videosignale anzugeben.

Diese Aufgabe wird gemäß der Erfindung durch die im Anspruch 1 angegebenen Merkmale gelöst. Weiterbildungen sind in den abhängigen Ansprüchen und in der zugehörigen Beschreibung genannt.

Zur Bewertung der Helligkeit an einem Bildpunkt werden Nachbarbildpunkte herangezogen. Nachbarbildpunkte sind zunächst einmal die in derselben Zeile liegenden Bildpunkte, einer oder mehrere dem aktuellen Bildpunkt vorweggehend und einer oder mehrere dem aktuellen Bildpunkt nachfolgend. Desweiteren sind Bildpunkte benachbart, die zu dem vorangegangenen Halbbild gehören. Diese Bildpunkte des vorangegangenen Halbbildes werden in einem Halbbildspeicher abgespeichert. Es ist nicht notwendig, einen Vollbildspeicher zu benutzen, weil die Helligkeits- bzw. Farbwerte des aktuellen Bildpunktes und der in derselben Zeile benachbarten Bildpunkte direkt einer Bewertungsschaltung zugeführt werden. Bei dem Auslesen aus dem Halbbildspeicher werden übereinanderliegende Bildpunkte eines Halbbildes miteinander verglichen, wenn jeweils der erste Wert um eine Zeilendauer verzögert wird. Es kann dann ein Schätzwert für den Helligkeits- bzw. Farbwert des dazwischenliegenden Bildpunktes eines zweiten Halbbildes errechnet werden, das entspricht einer eindimensionalen vertikalen Filterung. Dieser errechnete Schätzwert wird mit dem Helligkeits- bzw. Farbwert an dem Bildpunkt des aktuellen Teilbildes verglichen. Ein zweidimensionales Filter wird auf zwei eindimensionale Filter beschränkt. Zum Erkennen von Bewegungen wird der Vergleich der Helligkeits- bzw. Farbwerte zwischen aktuellem und vorangegangenem Teilbild einem horizontalen Filter zugeführt. Dieses horizontale Filter betrachtet dann nur noch Helligkeits- bzw. Farbwerte von Bildpunkten, wobei die Bildpunkte in einer Zeile liegen. Ein zweidimensionales Filter entfällt somit. Das eindimensionale Filter verzögert Farb- bzw. Helligkeitswerte um 2 Bildpunkte, vergleicht aktuellen Bildpunkt mit vorangegangenem und nachfolgendem Bildpunkt und gibt diesen Vergleich an eine Tabelle weiter. Die Tabelle erkennt anhand der hereinkommenden Werte eine gewünschte Ausgabeposition und weist dem hereinkommenden Wert gemäß einem Bewertungsfaktor k einen Ausgabewert zu. In dieser Tabelle wird allerdings nicht nur nach Rauschen und Bewegung entschieden, sondern es wird gleichzeitig eine Flankenversteilerung durchgeführt. Mögliche Einsatzgebiete dieser Erfindung sind einmal auf Senderseite und einmal auf Empfängerseite gegeben. Auf Senderseite braucht natürlich keine Kantenversteilerung durchgeführt zu werden. Eine Kantenversteilerung wird vorteilhaft auf der Empfängerseite durchgeführt, wobei der Bewertungsfaktor aus dieser Tabelle negativ wird.

Zum besseren Verständnis der Erfindung wird nachstehend ein Ausführungsbeispiel anhand von Figuren näher erläutert.

Es zeigen:

Fig. 1 eine Nachrichtenübertragungsanordnung,

Fig. 2 eine bewegte Kante,

Fig. 3 eine gemittelte bewegte Kante,

Fig. 4 eine Entrausch und Enhancement Schaltung

Fig. 5 ein Filter,

Fig. 6 ein Koordinatensystem mit einem Bewertungsfaktor k und

Fig. 7 Pixel auf einem Bildschirm.

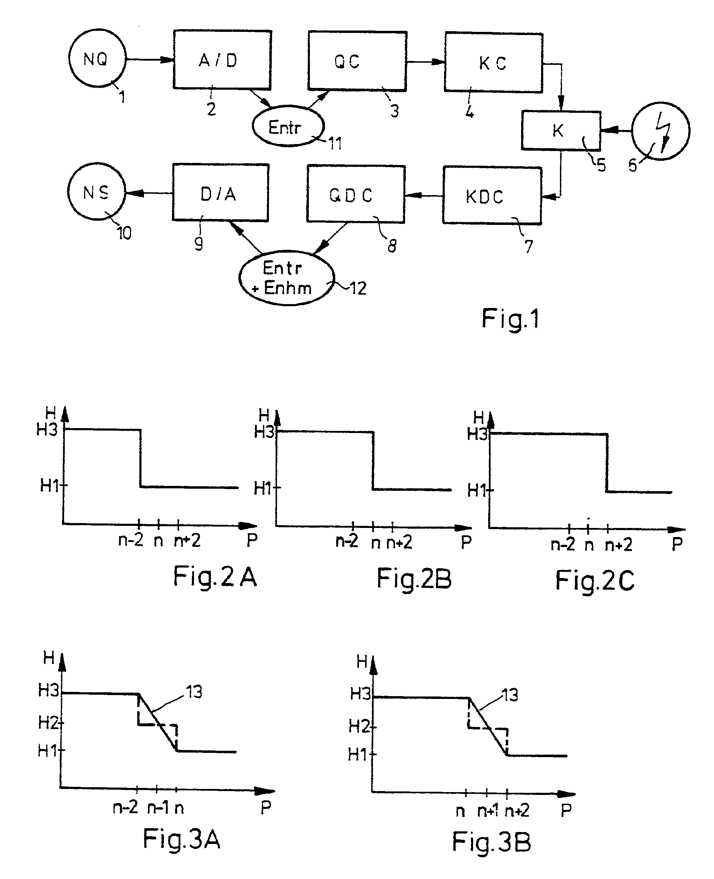

Fig. 1 zeigt eine Nachrichtenquelle 1, die elektrische Signale an einen A/D Wandler bzw. Analog-Digital-Umsetzer 2, im folgenden ADU genannt, abgibt. Digitalisierte Signale gelangen vom ADU 2 über eine Entrauschschaltung 11 zum Quellencoder 3, der die entrauschten Signale codiert. Die codierten Signale werden vom Kanalcoder 4, der die Signale mit Redundanz versieht, über einen Übertragungskanal 5 zu einem Kanaldecoder 7 übertragen. Der Übertragungskanal 5 wird von einer Störung 6 beeinflußt. Vom Kanaldecoder 7 werden die gestörten Signale an ein Quellendecoder 8 weitergegeben und dort decodiert. Die decodierten Signale gelangen über eine Entrausch- und Enhancementschaltung 12 zu einem D/A Wandler bzw. Digital-Analog-Umsetzer 9, im folgenden DAU genannt, und werden analogisiert. Die Analogsignale werden der Sinke 10 zugeführt. Eine solche Anordnung, allerdings ohne Entrauschschaltung 11 und Entrausch- und Enhancementschaltung 12, ist beispielsweise in der Dissertation "Adaptive Transformationscodierung von digitalisierten Bildsignalen" von W. Mauersberger an der TH Aachen beschrieben. Diese Anordnung trifft auch auf einen Video-recoder zu, der Daten blockweise auf einem Magnetband speichert und diese zur Bild und/oder Tonwiedergabe kanal- und quellendecodiert. Dabei ist der Kanal 5 durch ein Magnetband ersetzt. Im Kanalcoder 4 werden die zu übertragenden bzw. die auf ein Magnetband aufzuspeichernden digitalen Signale kanalcodiert. D.h., daß zweckmäßigerweise die auf ein Magnetband abzuspeichernden Binärsignale in ein Biphasesignal umgewandelt, mit Paritybits versehen werden und auf dem Magnetband abgespeichert werden. Im Kanaldecoder 7 werden die Biphasesignale decodiert und anhand der Paritybits ist eine erste Fehlerkorrektur möglich. Die Nachrichtenanordnung aus Nachrichtenquelle 1, ADU 2, Quellencoder 3 und Kanalcoder 4 kann allerdings auch für einen Sender, der Kanal 5 für eine HF-Übertragungsstrecke und der Kanaldecoder 7, der Quellendecoder 8, der DAU 9 und die Nachrichtensinke 10 für einen Empfänger, z.B. ein Fernsehgerät, stehen.

Fig. 2 zeigt in einem Koordinatensystem die Helligkeiten H1 und H3 in einer Fernsehzeile an den Orten n-2, n und n+2. Die Orte n-2 bis n+2 charakterisieren die Lage von Bildpunkten, im folgenden Pixel (Picture Element) genannt. Zwischen 2 Halbbildern werden bei einer Bewegung von links nach rechts, z.B ein helles Auto vor dunklem Hintergrund, zunächst der Punkt n und dann der Punkt n+2 von hell nach dunkel ausgesteuert. Fig. 2A steht für das erste Halbbild, Fig. 2B für das zweite Halbbild und Fig. 2C für das dritte Halbbild.

Bei einer Rauschunterdrückung werden die Helligkeiten von aktuellem Halbbild und vorangegangenem Halbbild miteinander addiert und durch 2 dividiert. Der dabei entstandenen Quotient wird mit dem aktuellen Halbbild verglichen, d.h. es wird die Differenz gebildet. Die Differenz ist ein Maß für den Rauschanteil. Liegt die Differenz nahe null, so kann von Rauschen, d.h. also von unerwünschten Störeffekten, gesprochen werden. Liegt die Differenz sehr hoch, was z. B. bei einer Bewegung mit weißem Auto vor dunklem Hintergrund passiert, so tritt ein Effekt auf, der Verschleifungseffekt genannt wird. Dieser Verschleifungseffekt ist in der Figur 3 dargestellt. Fig. 3A zeigt an der Stelle n-1 den Mittelwert H2 der Helligkeit zwischen den beiden anderen extremen Helligkeiten H1 und H3. Eine einfache Entrauschschaltung, die mit einer einfachen Quotientenbildung arbeitet, mittelt an den Stellen n-2 und n für die Stelle n-1 und gibt für das Pixel n-1 eine falsche Helligkeit vor. Dieser Verschleifungseffekt muß von einer Entrauschschaltung erkannt und korrigiert werden. Fig. 3B zeigt denselben Effekt wie die vorhergehende Figur an der Stelle n+1. Die Figuren 3A und 3B zeigen eine verschleifte Kante 13 von links nach rechts laufend.

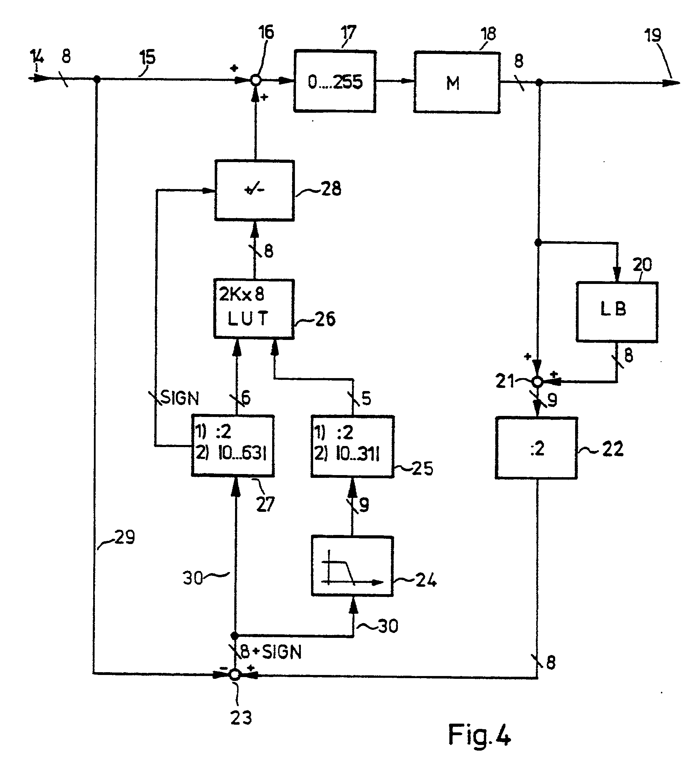

Fig. 4 zeigt ein Blockschaltbild einer Schaltung 11 bzw. einer zweiten Schaltung 12 zum Entrauschen und/oder Enhancement. Enhancement ist auch unter dem Begriff Crispening bzw. Flankenversteilerung bekannt. Der Eingang 14 weist acht Datenleitungen 15 auf, die zu einem Summierer 16 geführt werden. Vor dem Summierer 16 ist ein Verzögerungsglied gesetzt, der ankommende Daten um die Bearbeitungszeit der übrigen Schaltung verzögert. Vom Summierer 16 aus gehen acht Datenleitungen zu einem Begrenzer 17. Der Begrenzer 17 begrenzt digitale Signale bzw. Binärwerte auf einen Bereich, der zwischen null und 255 liegt. Vom Begrenzer 17 gehen acht Datenleitungen zum Speicher 18. Der Speicher 18 ist ein Halbbildspeicher, im folgenden Fieldmemory genannt. Der Speicher 18 ist frei addressierbar und wird vorteilhaft durch n RAM-Bausteine EDH 84 H 64 C-5-55 der Firma Electronic Inc. gebildet, die eine Speicherkapazität von 64Kx4 Bit aufweisen und n liegt in der Größenordnung von 7. Dabei ist eine Bildgröße von 720 Pixeln pro Zeile und 288 Zeilen pro Halbbild zugrunde gelegt. Von diesem Speicher 18 aus werden acht Datenleitungen zum Ausgang 19 geführt. Gleichzeitig gehen dieselben acht Datenleitungen auf einen Zeilenspeicher 20, im folgenden Linebuffer genannt. Dieser Linebuffer ist vorteilhaft auch als RAM aufgebaut mit 2Kx8 Bit Speicherraum. Dieser Speicher kann vorteilhaft durch Bausteine HM 65162 der Firma Harris aufgebaut sein. Desweiteren gehen die acht Datenleitungen des Fieldmemories 18 auf einen Addierer 21, zu dem zusätzlich acht Datenleitungen vom Ausgang des Linebuffers 20 führen. Im Addierer 21 werden somit Binärwerte addiert, die ein Maß für die Helligkeit zweier übereinander liegender Zeilen eines Halbbildes sind. Damit führen der Linebuffer 20, der Addierer 21 und der Divisor 22 eine vertikale Filterung durch. Vom Addierer 21 führen neun Datenleitungen zum Subtrahierer 23. Eine Division, wie in dem Divisor 22 dargestellt, läßt sich mit Binärzeichen dadurch erreichen, daß das letzte Bit, das LSB (Least Significant Bit) nicht beachtet wird und die neunte Leitung nicht auf den Subtrahierer 23 gelegt ist, sondern frei verläuft. Dem Subtrahierer 23 sind die acht Datenleitungen 15 von dem Eingang 14 zugeführt. Im Subtrahierer 23 werden die Werte, die von dem Addierer 21 kommen, von den Werten des aktuellen Teilbildes, die am Eingang 14 stehen, abgezogen. Am Ausgang des Subtrahierers 23 stehen somit Differenzen an, das sind acht Bit und ein Vorzeichen, im folgenden Signum genannt. Vom Subtrahierer 23 führen neun Datenleitungen für die acht Bit und das Signumbit zu einem horizontalen Filter 24. Von dem Filter 24 gehen neun Datenleitungen zu einem Begrenzer und Betragsbilder 25. Von den auf den neun Datenleitungen ankommenden neun Bit wird das erste Bit, das Signumbit, durch die Betragsbildung ignoriert. An den verbleibenden acht Bit wird durch die Division durch zwei das letzte Bit, das Least Significant Bit, auch ignoriert. Durch die Begrenzung auf einen Wert zwischen null und 31 werden weitere zwei Bit, zwei Most Significant Bit, MSB, ignoriert. Von dem Begrenzer und Betragsbilder 25 führen fünf Datenleitungen mit fünf Bit zu einer Korrekturschaltung 26, im folgendem Lookup Table 26 genannt. Desweiteren führen vom Subtrahierer 23 die neun Datenleitungen für die acht Bit und das Signumbit zu einem zweiten Begrenzer und Betragsbilder 27. Vor dem zweiten Begrenzer und Betragsbilder 27 wird ein Verzögerungsglied eingebaut, um eine Verzögerung in Filter 24 auszugleichen. Der zweite Begrenzer und Betragbilder 27 dividiert die auf den acht Datenleitungen ankommenden Bits durch zwei, d.h. er ignoriert das Least Significant Bit (LSB) und bildet den Betrag, d.h. er ignoriert das Signum. Die Datenleitung mit dem Signum wird zum Baustein 28 weitergeleitet. Vom Begrenzer und Betragsbilder 27 führen sechs Datenleitungen zu der Lookup Table 26. Dabei bleiben das Signumbit, das Least Significant Bit und das Most Significant Bit unberücksichtigt. Die Lookup Table 26 weist einen PROM Speicherbaustein mit 2k x 8 Bit auf und wird durch einen Baustein 87S191 der Firma National. gebildet. Der Inhalt der Lookup Table kann durch folgendes Computerprogramm beschrieben werden:

```
DO I1=0,2
    DO I2=1,63
        LOOKUP(I1,I2)=INT(2*I2*6/10)
    ENDDO
ENDDO
DO I1=3,31
    DO I2=1,63
        NC=NINT(0.6-0.9/29*(I1-2)*100)
        LOOKUP(I1,I2)=INT(2*I2*NC/100)
    ENDDO
ENDDO
```

Unter der Adresse, die von den 11 Bit gebildet ist, einmal 5 und einmal 6 Bit von den Betragsbildern und Begrenzern 25 und 27 geliefert, wird ein Ausgabewert mit acht Bit ausgegeben, der zu dem Addierer 16 weitergeleitet werden. In dem Baustein 28 wird das Signumbit vom Subtrahierer 23 wieder hinzugefügt. Die Addierer bzw. Subtrahierer 16,21 und 23 werden jeweils durch zwei Bausteine 74F382 gebildet. Die Begrenzer und Betragsbilder 25 und 27 sind keine Schaltungen im eigentlichen Sinne, sondern zeigen nur an, daß Datenleitungen nicht angeschlossen sind bzw. ungenutz bleiben. Die Bausteine 18,20-22 und 23-27 ersetzen ein zweidimensionales Filter. Die Bausteine 18,20-22 bewerten eine erste Dimension, die Bausteine 23-27 eine zweite Dimension. Die Bausteine 16 und 28 können zu einem Addierer/Subtrahierer (F382) zusammengefaßt werden, bei dem die Leitung SIGN die Rechenoperation steuert.

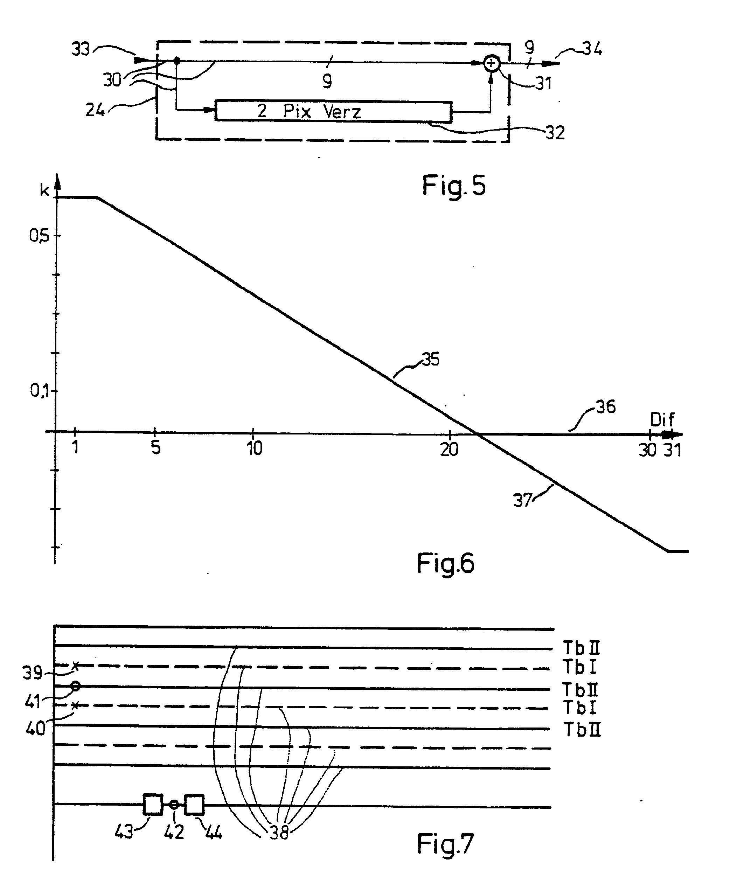

Fig. 5 zeigt den Aufbau des Filters 24. Vom Eingang 33 führen neun Datenleitungen 30 für acht Bit und einen Signumbit zu einem Verzögerungsglied 32 und einem Addierer 31. Das Verzögerungsglied 32 verzögert die Binär Daten, die ein Maß für die Differenz der Helligkeiten bzw. Farben sind, um zwei Bildelemente bzw. Pixel. Dazu werden drei Octal Delay Flip-Flops vom Typ LS 374 benutzt. Der Addierer 31 wird durch die Bausteine 74F382 gebildet. Das Filter bewertet aus drei aufeinanderfolgenden Werten die zu drei aufeinanderfolgenden Pixeln gehören, jeweils die beiden äußeren und läßt das mittlere unberücksichtigt. Für das mittlere Pixel n ergibt sich somit ein Wert FILTEROUT, der nach folgender Gleichung berechnet wird:

aktuelle Pixelnummer N
$$FILTEROUT=INT(PIXELDIF(N-1)+PIXELDIF(N+1))$$

Die Addition erfolgt im Addierer 31. Am Ausgang 34 steht somit auf neun Datenleitungen eine Summe an.

Fig. 6 erklärt anhand einer Kurve in einem Koordinatensystem die Unterschiede zwischen der Entrauschschaltung 11 und der Entrausch- und Enhancementschaltung 12. Auf der Abzisse ist die Differenz aufgetragen, die sich aus dem Betragsbilder und Begrenzer 25 ergibt. Diese Differenz führt zu einem Bewertungsfaktor k. K ist in der Lookup Table 26 abgespeichert und läßt sich gemäß des oben angegebenen Programms errechnen. Für eine Entrauschschaltung 11 verläuft die Kurve 35 für Differenzen größer als 21 als Kurve 36 auf der Abzisse weiter und fällt nicht in den negativen Bereich ab. Für eine Entrausch- und/oder Enhancementschaltung 12 mit Kantenversteilerung bzw. Crispening oder Enhancement wird die Kurve 35 für Differenzen größer als 21 negativ und gibt negative Werte aus. Gemäß dem Faktor k werden Differenzen bewertet bzw. multipliziert und dem Eingangssignal hinzugefügt.

Fig. 7 zeigt einen Fernsehschirm, auf dem ein Elektronenstrahl die Fernsehzeilen 38 überstreicht, die zu einem ersten Teilbild Tb1 und einem zweiten Teilbild Tb2 gehören. Aus zwei Helligkeits und/oder Farbwerten, die zu zwei in zwei verschiedenen Zeilen eines Halbblides nebeneinanderliegenden Bildpunkten 39 und 40 gehören, wird ein Schätzwert für den Helligkeits- und/oder Farbwert des dazwischenliegenden Bildpunktes 41 eines zweiten Teilbildes Tb2 berechnet. Diese Berechnung geschieht in den Blöcken 20 - 22. Ein Bildpunkt 42 wird mit dem Faktor k bewertet, der sich aufgrund der Helligkeits- bzw. Farbwerte des vorangegangenen und des nachfolgenden Bildpunktes 43 bzw. 44 ergibt. Diese Bewertung erfolgt in den Schaltungsteilen 23-27.

## Patentansprüche

1. Anordnung zur Rauschminderung mit Bewegungserkennung für digitalisierte Videosignale mit mindestens einem Bildspeicher (18), einem Filter (20-22,24), einer Korrekturschaltung (26) und einem Addierer (16,21) und/oder Subtrahierer (23), dadurch gekennzeichnet, daß die Korrekturschaltung (26) Differenzen und/oder Summen von Helligkeits- und/oder Farbwerten mit einem Faktor k bewertet, wobei der Faktor k positive oder negative Werte aufweist, und daß ein horizontales Filter (24) angeordnet ist, das Helligkeits- und/oder Farbwerte (H1, H2, H3) und-/oder deren Differenzen und/oder Summen eines oder mehrerer Bildpunkte (43) vor und eines oder mehrerer Bilfpunkte (44) nach eiem aktuellem Bildpunkt (42) bewertet.

2. Anordnung nach Anspruch 1, dadurch gekennzeichnet, daß die Korrekturschaltung (26) Differenzen und/oder Summen von Helligkeits- und/oder Farbwerten mit einem Faktor k multipliziert.

3. Anordnung nach Anspruch 1 und/oder 2, dadurch gekennzeichnet, daß ein vertikales Filter (20-22) angeordnet ist, das Farb- und/oder Helligkeitswerte (H1,H2,H3) von zwei oder mehreren übereinanderliegenden Bildpunkten (39,40) in zwei oder mehreren aufeinanderfolgenden Zeilen eines Halbbildes (Tb1) bewertet.

4. Anordnung nach Anspruch 3, dadurch gekennzeichnet, daß das vertikale Filter (20-22) die Helligkeits- und/oder Farbwerte (H1,H2,H3) eines ersten Halbbildes als Schätzwert für den Helligkeits- und-/oder Farbwert eines dazwischenliegenden Bildpunktes (41) bewertet (Fig. 7).

5. Anordnung nach einem oder mehreren der vorhergehenden Ansprüche, dadurch gekennzeichnet, daß der Speicher (18) Helligkeits- und/oder Farbwerte (H1,H2,H3) von Bildpunkten (39-41) eines Halbbildes (Tb1,Tb2) speichert.

## Claims

1. An arrangement for reducing noise with movement recognition for digitalised video signals having at least one picture store (18), one filter (20-22,24), one correction circuit (26) and one adder (16,21) and/or subtractor (23), **characterised in that** the correction circuit (26) weights, with a factor k, differences and/or sums of brightness and/or colour values, in which the factor k has positive or negative values, and that a horizontal filter (24) is arranged which weights brightness and/or colour values (H1, H2, H3) and/or their differences and/or sums of one or more picture points (43) before and of one or more picture points (44) after a current picture point (42).

2. An arrangement according to claim 1, **characterised in that** the correction circuit (26) multiplies differences and/or sums of brightness and/or colour values by a factor k.

3. An arrangement according to claim 1 and/or 2, **characterised in that** a vertical filter (20-22) is arranged which weights colour and/or brightness values (H1, H2,H3) of two or more picture points (39,40) which are one above the other in two or several successive lines of a field (Tb1).

4. An arrangement according to claim 3, **characterised in that** the vertical filter (20-22) weights the brightness and/or colour values (H1,H2,H3) of a first field as an estimate of the brightness and/or colour value of an intervening picture point (41) (Fig. 7).

5. An arrangement according to one or more of the preceding claims, **characterised in that** the memory (18) stores brightness and/or colour values (H1,H2,H3) of picture points(39-41) of a field (Tb1,Tb2).

## Revendications

1. Dispositif pour la réduction du bruit avec reconnaissance du mouvement pour des signaux vidéo numérisés avec au moins une mémoire d'images (18), un filtre (20-22, 24), un montage correcteur (26) et un addeur (16, 21) et/ou un soustracteur (23), **caractérisé en ce** que le montage correcteur (26) évalue des différences et/ou des sommes de valeurs de luminosité et/ou de couleur avec un facteur k, le facteur k présentant des valeurs positives ou négatives, et qu'il est placé un filtre horizontal (24) qui évalue les valeurs de luminosité et/ou de couleur (H1, H2, H3) et/ou leurs différences et/ou sommes d'un ou de plusieurs points d'image (43) avant et d'un ou de plusieurs points d'image (44) après un point d'image actuel (42).

2. Dispositif selon la revendication 1, **caractérisé en ce** que le montage correcteur (26) multiplie des différences et/ou des sommes de valeurs de luminosité et/ou de couleur avec un facteur k.

3. Dispositif selon la revendication 1 et/ou 2, **caractérisé en ce** qu'il est placé un filtre vertical (20-22) qui évalue les valeurs de couleur et/ou de luminosité (H1, H2, H3) de deux ou plusieurs points d'image superposés (39, 40) dans deux ou plusieurs lignes successives d'une trame (Tb1).

4. Dispositif selon la revendication 3, **caractérisé en ce** que le filtre vertical (20-22) évalue les valeurs de luminosité et/ou de couleur (H1, H2, H3) d'une première trame comme valeur estimative d'une valeur de luminosité et/ou de couleur d'un point d'image (41) intermédiaire (fig. 7).

5. Dispositif selon une ou plusieurs revendications précédentes, **caractérisé en ce** que la mémoire (18) mémorise les valeurs de luminosité et/ou de couleur (H1, H2, H3) de points d'image (39-41) d'une trame (Tb1, Tb2).

Fig.1

Fig.2 A          Fig.2B          Fig.2C

Fig.3A          Fig.3B

Fig.4

33 — 9 —34
30 9
24 2 Pix Verz 31
32

Fig. 5

Fig. 6

Fig. 7